# EUROPÄISCHE PATENTSCHRIFT

(11) **EP 1 449 809 B1**
(45) Veröffentlichungstag und Bekanntmachung des Hinweises auf die Patenterteilung: **11.05.2005**
(21) Anmeldenummer: 04012550.2
(22) Anmeldetag: 14.09.2002
(51) Int. Cl.: B67C 7/00

(54) **Etikettiermaschine**
Labelling device
Machine d'étiquetage

(30) Priorität: 14.09.2001 DE 10145455
(43) Veröffentlichungstag der Anmeldung: 25.08.2004
(62) Teilanmeldung aus: 02777111.2
(73) Patentinhaber: Krones AG, 93073 Neutraubling (DE)
(72) Erfinder: Eder, Erich, 93093 Donaustauf (DE)

(56) Entgegenhaltungen:
- DE-A- 19 741 476
- DE-C- 944 922
- US-A- 4 479 343

## Beschreibung

Die Erfindung betrifft eine Maschine zum Ausstatten von Artikeln (Flaschen, Dosen oder dgl.) gemäß dem Oberbegriff des Anspruchs 1.

Bei konventionell ausgeführten Etikettiermaschinen befinden sich alle wesentlichen Baugruppen (Karussell, Transportelemente, Etikettieraggregate usw.) auf einer großen gemeinsamen Tischplatte, die sozusagen die Maschinenbasis bildet. Ungünstig ist die raumgreifende Bauweise und schlechte Zugänglichkeit zu den einzelnen Baugruppen, was Wartungs- und Reinigungsarbeiten erschwert.

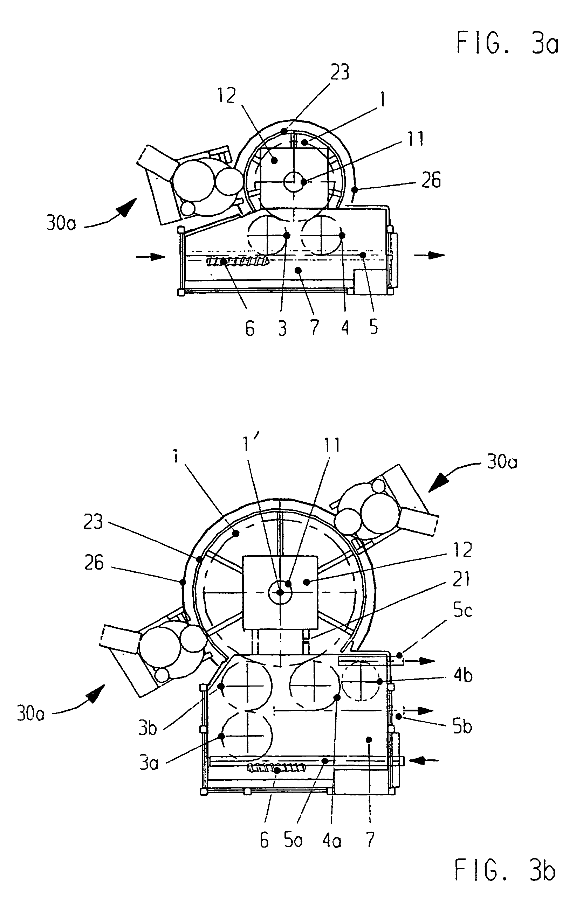

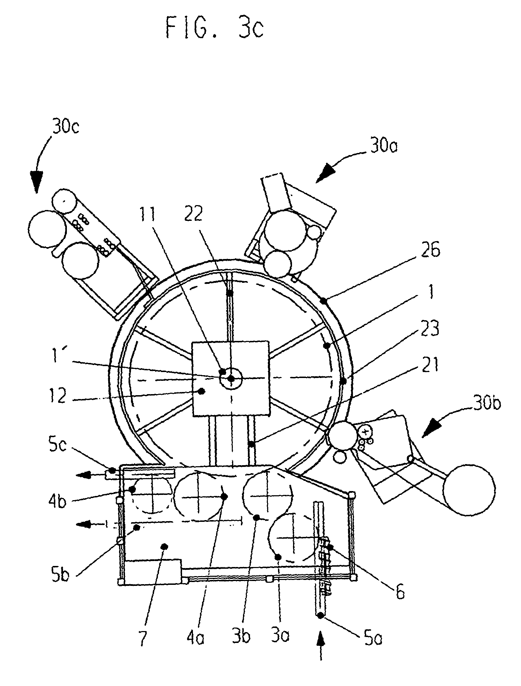

Durch DE 31 34 661 A1 wurde bereits vorgeschlagen, ein mittenfreies Behandlungskarussell zusammen mit den Transportelementen zum Zu- und Abführen der Artikel sowie den Etikettieraggregaten auf einer verkürzten Tischplatte zu lagern (Fig. 3). Trotz der vorgeschlagenen Verkürzung ist die verbleibende Tischplatte immer noch verhältnismäßig groß und aufwändig. Hauptnachteil ist jedoch die - wie bei den meisten konventionell ausgeführten Etikettiermaschinen - fehlende Flexibilität in Bezug auf spätere Änderungen der Maschinenkonfiguration. Diese sind in der Regel mit einem erheblichen Aufwand verbunden, so dass häufig eine neue Maschine kostengünstiger ist als ein tiefgreifender Umbau einer bestehenden Maschine.

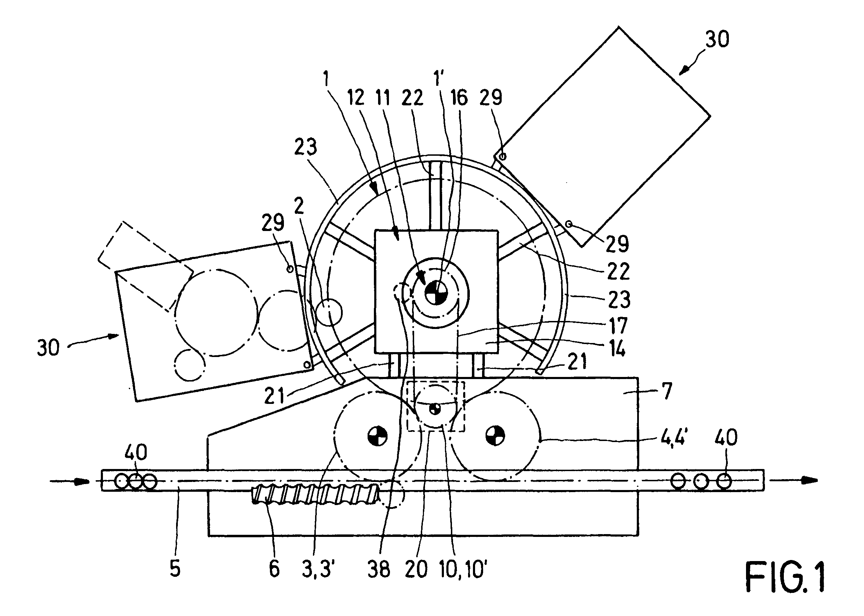

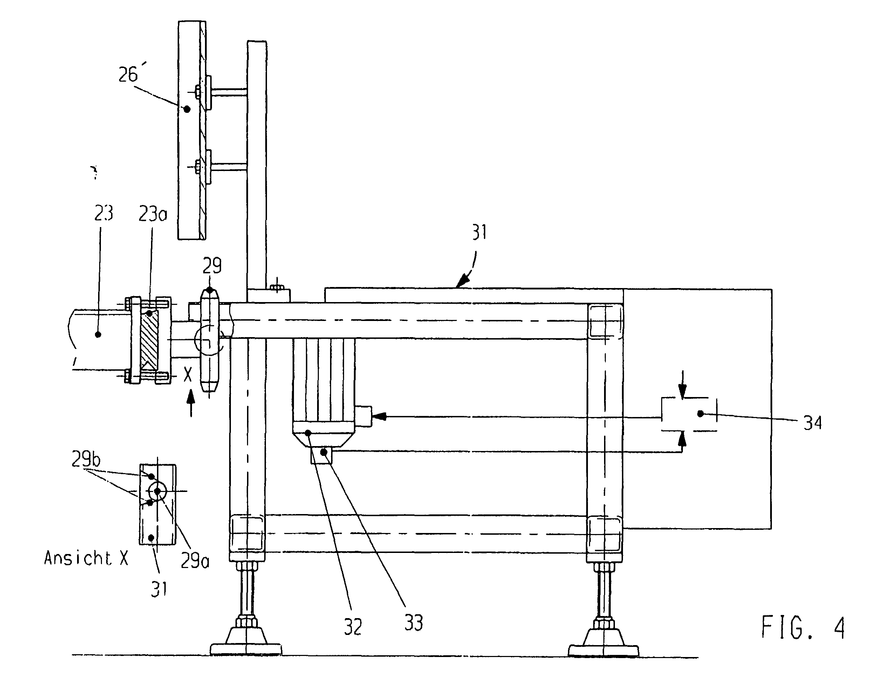

Aus DE 197 41 476 A1, die dem Oberbegriff des Anspruchs 1 entspricht, ist ferner bekannt, bei einer Etikettiermaschine das Behandlungskarussell, die Transportelemente zum Zu- und Abführen der zu etikettierenden Artikel sowie die Etikettieraggregate anstelle auf einer gemeinsamen Tischplatte (Fig. 1) jeweils separat auf eigenen Untergestellen (Fig. 4) anzuordnen. Dieses System bietet im Hinblick auf eine flexible Modulbauweise für den Benutzer Vorteile, wenn alle zuvor genannten Elemente der Maschine jeweils durch einen eigenen motorischen Antrieb beaufschlagbar sind, verursacht aber einen erhöhten antriebstechnischen Aufwand.

Demgegenüber liegt der Erfindung die Aufgabe zugrunde, eine einfache und kostengünstige Maschine zum Ausstatten von Artikeln anzugeben, die eine hohe Flexibilität und gute Zugänglichkeit aufweist.

Gelöst wird diese Aufgabe durch die Merkmale des Anspruchs 1.

Dadurch, dass nur die die Artikel zum Karussell zu- und abführenden Transportelemente (Einlauf-, Auslaufsternräder, Einteilschnecke, Förderbänder) auf einer gemeinsamen Tischplatte gelagert sind, kann diese vorteilhafterweise sehr kompakt gehalten werden, wobei die Antriebselemente (Motor, Zahnräder, Zugmittelgetriebe, Wellen oder dgl.) günstiger Weise an der Unterseite der Tischplatte befestigbar sind, während das eigentliche Karussell zur Behandlung der Artikel beim Ausstattungsvorgang mit seinem Drehlager außerhalb der Tischplatte separat für sich auf einem eigenen Traggestell angeordnet ist.

Diese Lösung erlaubt die Realisierung eines kostengünstigen Antriebssystems für die Transportelemente mit nur einem motorischen Antrieb, während die Weiterverzweigung der Kraftübertragung in erwähnter Weise durch mechanische Elemente erfolgt. Zugleich ist eine gute Zugänglichkeit des freistehenden Behandlungskarussells und der einzelnen ebenfalls freistehenden Etikettieraggregate gegeben, die am Umfang des Karussells an beliebigen Positionen in Abhängigkeit der gewünschten Ausstattungsvarianten platzierbar sind. Diese Etikettieraggregate können unterschiedlicher Ausführung (Nassleim-Aggregat, Heißleim-Aggregat, Spende-Aggregat für Selbstklebeetiketten, Etikettieraggregat für Rollenetiketten oder dgl.) sein und jeweils über ein eigenes Untergestell, ggf. auch über jeweils mindestens einen eigenen motorischen Antrieb verfügen.

An der Peripherie des Karussells sind Elemente zur Festlegung der relativen Lage der Etikettieraggregate, der Anbürstelemente und noch weiterer Maschinenbauteile zum Karussell vorhanden, die neben dem radialen Abstand auch die Höhe, Neigung und die Position am Umfang des Karussells bestimmen. Eine umständliche und ungenaue Befestigung der genannten Bauteile am Hallenboden zur Fixierung der Relativpositionen ist damit entbehrlich. Hierfür sind horizontale, ggf. in Umfangsrichtung verstellbare Ausleger am Drehlager bzw.Gestell des Karussells geeignet. Günstig ist insbesondere eine an den Karussellumfang angepaßte ringförmige Elementausführung, weil damit beliebige, stufenlose Umfangspositionierungen einfach realisierbar sind. Diese Lösung ermöglicht einen schnellen Wechsel der Etikettieraggregate und ggf. weiterer Formatteile, wie Anbürstelemente oder dgl. beim Benutzer einer Maschine, wenn eine Umstellung auf eine andere Ausstattung oder Flaschengröße erfolgen soll, insbesondere in Verbindung mit voreingestellten wechselkupplungselementen, die eine schnelle und exakte Selbstzentrierung der entsprechenden Bauteile gewährleisten.

Auf Grund dieses Konzepts ist neben der hervorragenden Zugänglichkeit eine hohe Flexibilität für den Benutzer der Maschine und eine Vereinfachung der Herstellung und Montage für den Hersteller der Maschine durch die einzelnen Maschinenmodule gegeben, die bei Bedarf wechselbar bzw. individuell kombinierbar sind.

Das separat stehende Drehlager des Karussells kann durch eine tischartige Gestellkonstruktion gebildet werden und ggf. geneigte Oberflächen zur verbesserten Flüssigkeits- und Schmutzableitung besitzen, wodurch die Reinigung der Maschine erleichtert wird.

Günstigerweise ist die Außenkontur der tischartigen Gestellkonstruktion kleiner ausgeführt als die äußere Peripherie des Karussells und überragt diese nicht in radialer Richtung. Dadurch ist eine gute Zugänglichkeit zum Karussell sichergestellt. Lediglich ein das Karussell zumindest teilumfänglich (vom Artikelein- bis zum Artikelauslauf) umgebender Ring überragt das Karussell in einer tieferliegenden Ebene in radialer Richtung geringfügig, wodurch vorteilhafterweise gerade Stützen zum Halten von Maschinenteilen, wie Schutzverkleidungen, Anbürstkörper oder dgl. ohne Bodenkontakt direkt auf den Ring gestellt und jederzeit lös- und verstellbar befestigt werden können. An diesem Ring sind auch freistehende Etikettieraggregate an beliebigen Umfangspositionen festlegbar. Dieser Vorteil kommt auch dann noch zum Tragen, wenn die o.g. Gestellkonstruktion des Karussells und die Tischplatte für die Transportelemente einstückig ausgebildet oder diese unlösbar miteinander verbunden sind.

Weitere vorteilhafte Ausgestaltungen sind Gegenstand der verbleibenden abhängigen Ansprüche.

Nachfolgend wird ein bevorzugtes Ausführungsbeispiel anhand der Fig. erläutert. Es zeigt:
- Fig. 1: eine Draufsicht einer Ausstattungsmaschine in schematischer Darstellung,
- Fig. 2: eine Seitenansicht des Karussells der Ausstattungsmaschine nach Fig. 1 in teilweiser Schnittdarstellung,
- Fig. 3a bis 3c: mehrere Varianten einer Ausstattungsmaschine in schematischer Draufsicht,
- Fig.4: ein Untergestell eines Etikettieraggregats in vergrößerter Darstellung und
- Fig. 5: ein Detail der Ausstattungsmaschine aus Fig. 2 in vergrößerter Abbildung.

Die Ausstattungsmaschine besitzt ein Karussell 1, das in Fig. 1 nur mit seinem Teilkreis angedeutet ist und mehrere in gleichmäßigen Teilungsabständen angeordnete Drehteller 2 aufweist. Des weiteren sind ein Einlaufsternrad 3 und ein Auslaufsternrad 4 vorhanden, deren Teilkreise jeweils den Teilkreis des Karussells 1 berühren. Beide Sternräder 3 und 4 sind zwecks der besseren Übersicht in Fig. 1 ebenfalls nur durch ihre Teilkreise angedeutet. An der vom Karussell 1 wegweisenden Seite der Sternräder 3 und 4 befindet sich ein deren Teilkreise tangierendes, geradliniges Förderband 5, an dem seitlich im Bereich vor dem Einlaufsternrad 3 eine parallel ausgerichtete Einteilschnecke 6 angeordnet ist. Die Einteilschnecke 6, das Förderband 5 und die Sternräder 3, 4 sind auf einer gemeinsamen Tischplatte 7 angeordnet bzw. gelagert.

Die Sternräder 3, 4 stehen über vertikale Wellen mit unter der Tischplatte 7 drehbar gelagerten, einen mit den Sternradteilkreisen übereinstimmende Teilkreisdurchmesser aufweisenden Zahnrädern 3', 4' verdrehfest in Verbindung, die ihrerseits mit dem Antriebszahnrad 10 eines elektromotorischen Maschinenhauptantriebs 20, z.B. ein drehzahlregelbarer Asynchronmotor mit Untersetzungsgetriebe, kämmen. Koaxial zum Antriebszahnrad 10 ist ein mit diesem verdrehfest verbundenes Zahnriemenrad 10' angeordnet, das über einen Zahnriemen 17 mit einem zum Antrieb des Karussells 1 dienenden Zahnriemenrad 16 in Eingriff steht. Der Antrieb der Einteilschnecke 6 sowie ggf. auch des Förderbands 5 erfolgt durch im Detail nicht gezeigte mechanische Kraftübertragungselemente (Zahnräder, Zahnriemen und Gelenkwellen) über eines der vorgenannten Zahnräder vom Maschinenhauptantrieb 20 aus. Es versteht sich, dass der Maschinenhauptantrieb alternativ auch direkt dem Karussell 1 zugeordnet werden könnte, oder sowohl der Tisch 7 als auch das Karussell 1 jeweils einen eigenen Motor erhalten könnten, die zueinander synchronisiert sind, wobei dann der Zahnriemen 17 entbehrlich wäre.

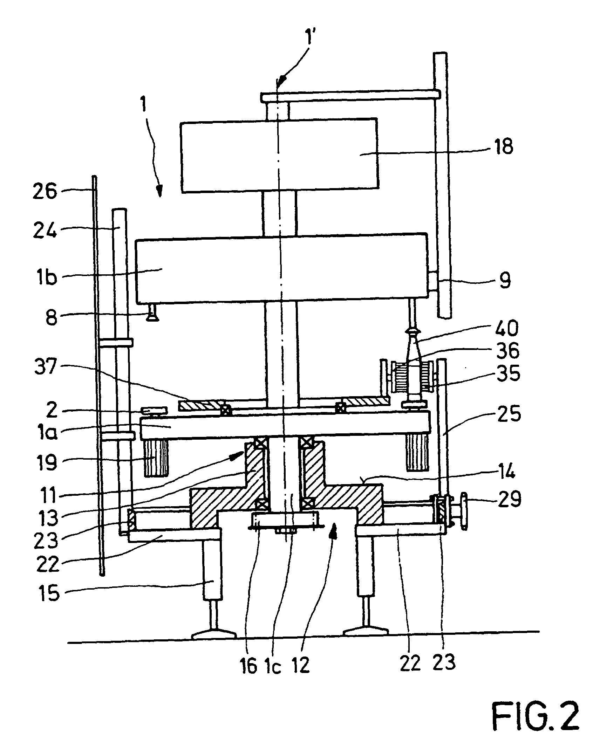

Die durch eine vertikale Mittelwelle 1c gebildete Drehachse 1' des Karussells 1 wird von einem Drehlager 11 aufgenommen, das neben der Tischplatte 7 separat für sich stehend angeordnet ist. Dieses ein tischartig ausgebildetes Gestell 12 aufweisende Drehlager 11 ist am besten in Fig. 2 erkennbar. Wie dort dargestellt, trägt das auf Stützfüßen 15 stehende Gestell 12 in einer angeformten oder aufgesetzten, innen hohlen Lagersäule 13 die Mittelwelle 1c. Die Mittelwelle 1c ist über ein an ihrem unteren Ende verdrehfest angebrachtes Zahnriemenrad 16 antreibbar.

An der Mittelwelle 1c ist unter anderem ein Drehtisch 1a und ein darüber angeordnetes, ggf. höhenverstellbares Oberteil 1b des Karussells 1 verdrehfest gelagert. Auf dem oberen Ende der Mittelwelle 1c befindet sich ein Gehäuse 18 für die Steuerung von Servomotoren 19, welche an der Unterseite des Drehtisches 1a angeordnet sind und zum programmgesteuerten Antrieb der drehbar auf dem Drehtisch 1a gelagerten Drehtellern 2 dienen. Jedem Drehteller 2 ist eine im Oberteil 1b des Karussells 1 heb- und senkbare Zentrierglocke 8 zugeordnet, die in bekannter Weise durch eine nicht dargestellte Steuerkurve betätigbar ist. Um die Steuerkurve gegen Mitdrehen zu sichern, ist eine gestellfeste Drehmomentstütze 9 vorhanden.

Zur lagerichtigen Zuordnung des Karussells 1 zu den Sternrädern 3 und 4 ist das Gestell 12 des Drehlagers 11 mit der Tischplatte 7 durch zwei den vorhandenen Zwischenraum überbrückende Streben 21 verbunden, insbesondere lösbar, beispielsweise durch Verschraubungen, Paßstifte oder andere geeignete Elemente. Erleichtert wird die Verbindung durch die höhengleiche Anordnung der Tischplatte 7 und der Tischplatte 14 des Gestells 12, die beide horizontal mit ebener Oberfläche ausgebildet sind.

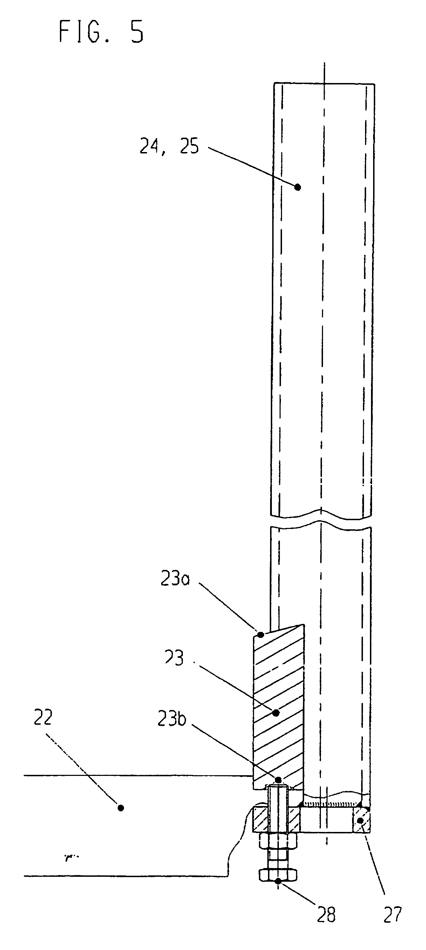

An der Unterseite der Tischplatte 14 des Gestells 12 des Drehlagers 11 sind mehrere sich horizontal radial nach außen erstreckende Ausleger 22 befestigt, die einen das Karussell 1 zumindest teilumfänglich umgebenden Ring 23 tragen. Dieser einen größeren Durchmesser als der Drehtisch 1a aufweisende, unter diesem liegende Ring 23 reicht in Umfangsrichtung dicht an die Ränder der Tischplatte 7 heran und ist an seinem oberen Rand mit einer geneigten, radial nach innen abfallenden Fläche 23a ausgestattet, während der untere Rand mit einer V-förmigen, in Umfangsrichtung verlaufenden Rille 23b versehen ist (Fig.5). An der radial äußeren Seite des Rings 23 können umfänglich an beliebiger Stelle Etikettieraggregate 30 angedockt werden. Um einerseits einen schnellen Wechsel der Etikettieraggregate 30 und andererseits eine genaue, d.h. reproduzierbare Lagezuordnung zum Karussell 1 sicherzustellen, sind lösbare Kupplungselemente mit zentrierender Funktion paarweise vorgesehen. Diese sind beispielsweise als senkrechte Bolzen oder Stifte 29 ausgebildet, an denen ein passende Bohrungen 29a aufweisendes Etikettieraggregat 30 bzw. dessen Untergestell 31 eingehängt werden kann. Die genannten Stifte 29 sind mit Klemmplatten oder dgl. an beliebiger Stelle des Rings 23 starr befestigbar. Es wäre aber denkbar, die Stifte 29 zum Andocken der Etikettieraggregate beweglich zu lagern, z. B. vertikal verschiebbar, wodurch eine Hubbewegung des Etikettieraggregats zum Anbringen oder Entfernen entfällt.

Wie aus Figur 4 ersichtlich, weist das Untergestell 31 eines Etikettieraggregats an seiner zum Ring 23 weisenden Seite ein Vierkantrohr mit Bohrungen 29a und versetzt darunter liegenden, zum Ring 23 hin offenen V-förmigen Einführschrägen 29b auf. Diese mit X bezeichnete Detailansicht ist von unten gesehen dargestellt. Mit einem Palettenhubwagen oder Gabelstapler kann das Untergestell 31 zum Einhängen an den Stiften 29 soweit angehoben werden, dass sich die Bohrungen 29a oberhalb, die Einführschrägen 29b jedoch noch unterhalb des oberen Endes der Stifte 29 befinden. Durch radiales Heranfahren an die Stifte 29 zentrieren die Einführschrägen 29b das Untergestell 31 bis die Bohrungen 29a mit den Stiften 29 axial fluchten. In dieser Stellung können die Bohrungen 29a durch Absenken des Untergestells 31 mit den Stiften 29 formschlüssig in Eingriff gebracht werden. Die exakte Höhe und Neigung ist durch einzeln höhenverstellbare Füße am Untergestell 31 einstellbar.

Auf dem Untergestell 31 ist außerdem an der zum Karussell 1 weisenden Seite eine Schutzscheibe 26' befestigt, deren Außenkontur an einen Ausschnitt in einer das Karussell umfänglich umgebenden Schutzscheibe 26 angepaßt ist. Ebenfalls an der zum Karussell 1 weisenden Seite können nicht dargestellte Andrückelemente (Schwammgeländer, -rollen oder Bürstenkörper) zum Anformen von Etiketten an die Flaschen 40 oder dgl. am Untergestell 31 befestigt sein, insbesondere - vom Karussell 1 aus gesehen- vor der Schutzscheibe 26'. Vorteilhafterweise werden dadurch bei einem Wechsel eines Etikettieraggregats automatisch auch immer die zur jeweiligen Flaschenkontur passenden Andrückelemente bereitgestellt. Zwecks der besseren Übersicht ist das Etikettieraggregat in Fig. 4 nicht abgebildet.

Der Ring 23 fungiert ferner als Träger für senkrecht auf ihm stehend angeordnete Stützen 24, 25, wobei Stützen 24 als Halterung für das Karussell 1 umfänglich umgebende Schutzscheiben 26 dienen, die entlang der Stützen 24 heb- und senkbar geführt sind, und Stützen 25, die als Halterung für äußere Bürstenkörper 35 zum Anstreichen von Etiketten an die Flaschenkontur vorgesehen sind. Zur Halterung innenliegender Bürstenkörper 36 ist auf dem Drehtisch 1a eine Tragscheibe 37 gelagert und gegen Verdrehen gesichert. Die Stützen 24, 25 weisen an ihren unteren Enden zur schrägen Fläche 23a des Rings 23 formschlüssig passende schräge Anfräsungen auf, so dass diese in axialer und radialer Richtung zum Ring 23 ausgerichtet und durch eine in die Rille 23b eingreifende, in einer am unteren Ende der Stützen befestigten, den Ring unterfassenden Platte 27 gehaltene Klemmschraube 28 oder sonstige lösbare Befestigung radial und axial festgelegt sind. Auch die bereits genannte Drehmomentstütze 9 kann in gleicher Weise auf dem Ring 23 verdrehfest befestigt sein (siehe Fig. 5).

Die Etikettieraggregate 30 besitzen jeweils ein eigenes Untergestell 31, das ggf. mit Rädern verfahrbar ausgebildet sein kann. Das Untergestell 31 weist eine das Etikettieraggregat 30 tragende Platte und ein Gehäuse auf, in dem ein elektromotorischer Antrieb 32 mit seiner zugeordneten Steuerung 34 untergebracht ist. Diese Steuerung 34 ist so ausgebildet, dass sie den Antrieb des Etikettieraggregats 30 stellungsgerecht, d.h. lage- und geschwindigkeitssynchron zur kontinuierlichen Drehbewegung des Karussells 1 nachfolgend regelt. Der Antrieb 32 kann ein frequenzgeregelter Asynchronmotor mit einem Drehgeber 33 zur Istwert-Rückführung an die Steuerung 34 sein. Am Karussell 1 befindet sich ein als Sollwertgeber dienender Drehgeber 38, der bei einer Drehung des Karussells 1 um einen Teilungsabstand zweier benachbarter Drehteller 2 beispielsweise 5000 Takte oder Impulse an den Eingang der Steuerung 34 des Aggregatantriebs 32 liefert, wodurch ein mit einem vorgebbaren Übersetzungsverhältnis drehwinkelgenauer, geregelter Gleichlauf zwischen einem Etikettieraggregat 30 und dem Karussell 1 realisierbar ist. Jedes Etikettieraggregat 30 kann mit schnell lösbaren Steckverbindungen zur Energie- und Druckluftversorgung sowie Signalübertragung ausgerüstet sein.

Zur Feineinstellung der Position eines Etikettieraggregats 30 kann es radial, tangential und in seiner Höhe relativ zum Drehtisch 1a verstellbar auf seinem Untergestell 31 bzw. dessen Platte gelagert sein.

Aus der Figurenfolge 3a bis 3c ist die Variabilität des Maschinenkonzepts ersichtlich. Ein vorhandenes Karussell 1 kann beliebig mit verschieden gestalteten Ein- und Auslaufkonfigurationen kombiniert werden. Einem Karussell 1 kann beispielsweise eine Tischplatte 7 mit zwei Sternrädern 3, 4 für einen geraden, in eine Förderrichtung fluchtend verlaufenden Flaschentransport 5 (Fig. 3a), oder eine Tischplatte 7 mit drei oder mehr Sternrädern 3a,3b,4a,4b für einen winkelförmigen (Fig. 3c) oder parallelen, ggf. gegenläufigen Flaschentransport 5a,5b,5c (Fig. 3b) beigestellt werden.

Daraus ergibt sich für den Benutzer einer derartigen Maschine der Vorteil, dass bei einer Veränderung eines bestehenden Anlagenlayouts einer Flaschenfülllinie die Ausstattungsmaschine durch Austausch der Tischplatte 7 bzw. des gesamten Ein- und Auslaufbereichs und Hinzufügung einer neuen Platte unter weiterverwendung des Karussells 1 und der Etikettieraggregate ohne Anschaffung einer neuen Maschine flexibel anpaßbar ist. Es können beliebig Nassleimetikettieraggregate 30a, Rollenetikettieraggregate 30b und Spendeaggregate 30c für Selbstklebeetiketten kombiniert oder ausgetauscht werden. Die Nassleimetikettieraggregate 30a können entsprechend DE 197 41 476 A1, d.h. mit rotierenden oder oszillierenden Haftflächen zur Etikettenentnahme, ausgebildet sein. Jede dieser Haftflächen kann ggf. durch einen eigenen programmsteuerbaren elektromotorischen Antrieb betätigt werden.

Umgekehrt kann auch der Fall eintreten, dass nur das Karussell 1 zu wechseln ist; beispielsweise ein kleines Karussell durch eines mit größerem Durchmesser ersetzt wird, wenn auf eine Flasche 40 andere oder mehr Etiketten als zuvor aufgebracht werden sollen, wozu eine längere Behandlungsstrecke erforderlich sein kann. Hier können die Etikettieraggregate und die Tischplatte 7 mit dem Flaschenein- und -auslauf beibehalten werden. Es müssen allerdings dem neuen Karusselldurchmesser angepasste Streben 21 mit entsprechender Länge vorgesehen werden.

## Patentansprüche

1. Maschine zum Ausstatten von Artikeln (40) wie Gefäße oder dgl. mit wenigstens einem Karussell (1), wenigstens einem an seiner Peripherie angeordneten Etikettieraggregat (30) zum Ausstatten der Artikel (40) und mit synchron antreibbaren Transportelementen (3, 4, 5, 6) zum stellungsgerechten Zu- und Abführen der Artikel (40), **dadurch gekennzeichnet, dass** die Transportelemente (3, 4, 5, 6) auf einer ersten Tischplatte (7) und das Karussell (1) in einem außerhalb der Tischplatte (7) angeordneten Drehlager (11) gelagert sind.

2. Maschine nach Anspruch 1, **dadurch gekennzeichnet, dass** das Drehlager (11) ein separat stehendes, vorzugsweise tischartiges Gestell (12) aufweist, insbesondere eine zweite Tischplatte (14) mit einer angeformten oder aufgesetzten Lagersäule (13).

3. Maschine nach Anspruch 2, **dadurch gekennzeichnet, dass** die Lage der Tischplatten (7, 14) zueinander durch vorzugsweise zerstörungsfrei lösbare Verbindungselemente (21) festlegbar ist.

4. Maschine nach Anspruch 2 oder 3, **dadurch gekennzeichnet, dass** die erste und zweite Tischplatte (7, 14) mit einem einen freien Zwischenbereich bildenden Abstand zueinander angeordnet sind.

5. Maschine nach einem der Ansprüche 2 bis 4, **dadurch gekennzeichnet, dass** die Oberseite der Tischplatten (7, 14) geneigte, insbesondere walmdachartige Oberflächen aufweist.

6. Maschine nach einem der Ansprüche 2 bis 5, **dadurch gekennzeichnet, dass** am Gestell (12) Antriebselemente für das Karussell (1) und/oder an der die Transportelemente (3, 4, 5, 6) tragenden Tischplatte (7) Antriebselemente (3', 4', 10, 20) für die Transportelemente (3, 4, 5, 6) gelagert sind.

7. Maschine nach einem der Ansprüche 2 bis 6, **dadurch gekennzeichnet, dass** an einer der Tischplatten (7, 14) ein Antriebsmotor (20) angeordnet ist und zwischen beiden Tischplatten (7, 14) Kraftübertragungselemente (10', 16, 17) vorhanden sind.

8. Maschine nach einem der Ansprüche 2 bis 7, **dadurch gekennzeichnet, dass** die senkrechte Projektionsfläche des das Kraussell (1) tragenden Gestells (12) kleiner ist als die des Karussells (1).

9. Maschine nach einem der Ansprüche 2 bis 8, **dadurch gekennzeichnet, dass** die Tischplatte (14) des Gestells (12) eine innerhalb des Karussellumfangs liegende Außenkontur aufweist.

10. Maschine nach einem der Ansprüche 2 bis 9, **dadurch gekennzeichnet, dass** am Gestell (12) radial nach außen abstehende, den Karussellumfang überragende Ausleger (22) befestigt sind.

11. Maschine nach Anspruch 10, **dadurch gekennzeichnet, dass** die Ausleger (22) zumindest eine das Karussell teilumfänglich umgebende Schutzverkleidung (26) mittelbar oder unmittelbar halten und/oder tragen.

12. Maschine nach Anspruch 10 oder 11, **dadurch gekennzeichnet, dass** die Ausleger (22) einen das Karussell (1) zumindest teilumfänglich umgebenden, vorzugsweise einen größeren Durchmesser als das Karussell (1) aufweisenden Ring (23) tragen.

13. Maschine nach einem der Ansprüche 1 bis 12, **dadurch gekennzeichnet, dass** die Tischplatte (7) für die Transportelemente wenigstens einen Zuförderer (5, 5a, 6, 3, 3a, 3b) und wenigstens einen Abförderer (5, 5b, 5c, 4, 4a, 4b) für die Artikel (40) trägt.

14. Maschine nach Anspruch 13, **dadurch gekennzeichnet, dass** Zu- und Abförderer (5) zueinander fluchtend angeordnet sind.

15. Maschine nach Anspruch 13, **dadurch gekennzeichnet, dass** Zu- und Abförderer (5a, 5b, 5c) parallel verlaufend angeordnet sind, insbesondere mit gegensinniger Föderrichtung.

16. Maschine nach Anspruch 13, **dadurch gekennzeichnet, dass** Zu- und Abförderer (5a, 5b, 5c) quer zueinander, insbesondere rechtwinklig verlaufend angeordnet sind.

17. Maschine nach wenigstens einem der Ansprüche 1 bis 16, **dadurch gekennzeichnet, dass** die Transportelemente, Sternräder (3, 3a, 3b, 4, 4a, 4b) und/oder Förderbänder (5, 5a, 5b, 5c) und/oder Luftförderer und/oder Förderschnecken (6) und/oder Transportriemen sind.

18. Maschine nach Anspruch 12, **dadurch gekennzeichnet, dass** beliebig am Umfang des Karussells (1) platzierbare Etikettieraggregate (30, 30a, 30b, 30c) am Ring andockbar sind, insbesondere durch lösbare, vorzugsweise selbstzentrierende Kupplungselemente (29, 29a, 29b).

19. Maschine nach wenigstens einem der Ansprüche 1 bis 18, **dadurch gekennzeichnet, dass** die Etikettieraggregate (30, 30a, 30b, 30c) und/oder die diese aufnehmenden Untergestelle (31) eine Schutzscheibe (26') und/oder Andrückelemente (35) tragen.

20. Maschine nach wenigstens einem der Ansprüche 1 bis 19, **dadurch gekennzeichnet, dass** die Etikettieraggregate (30, 30a, 30b, 30c) eigene, zur Bewegung des Karussells (1) synchronisierte elektromotorische Antriebe (32) aufweisen, deren Steuerung (34) vorzugsweise in ein ein Etikettieraggregat tragendes Untergestell (31) integriert ist.

21. Maschine nach Anspruch 20, **dadurch gekennzeichnet, dass** jedes Etikettieraggregat schnell lösbare Steckkupplungen für elektrische Energieversorgung, Signalaustausch mit einer Maschinensteuerung (38) und ggf. Druckluftversorgung aufweist.

22. Maschine nach wenigstens einem der vorhergehenden Ansprüche 1 bis 21, **dadurch gekennzeichnet, dass** an der Peripherie des Karussells (1) Elemente (21, 22, 23) zur Festlegung der relativen Lage wenigstens des Etikettieraggregats (30) zum Karussell (1) vorhanden sind.

23. Maschine nach Anspruch 22, **dadurch gekennzeichnet, dass** die gestellfesten Elemente als Ausleger (22) und/oder Streben (21) ausgebildet sind, die vorzugsweise den Karussellumfang radial nach außen überragen.

24. Maschine nach Anspruch 23, **dadurch gekennzeichnet, dass** die Ausleger (22) zumindest eine das Karussell teilumfänglich umgebende Schutzverkleidung (26) mittelbar oder unmittelbar halten und/oder tragen.

25. Maschine nach Anspruch 22, **dadurch gekennzeichnet, dass** die Elemente als ein das Karussell (1) zumindest teilumfänglich umgebender Ring (23) ausgebildet sind, der vorzugsweise von radial nach außen vom Gestell (12) des Karussells abstehenden Auslegern (22) getragen wird und insbesondere einen größeren Durchmesser als das Karussell (1) aufweist.

26. Maschine nach Anspruch 25, **dadurch gekennzeichnet, dass** beliebig am Umfang des Karussells (1) platzierbare Etikettieraggregate (30, 30a, 30b, 30c) am Ring (23) andockbar sind, insbesondere durch lösbare, vorzugsweise selbstzentrierende Kupplungselemente (29, 29a, 29b).

27. Maschine nach Anspruch 25 oder 26, **dadurch gekennzeichnet, dass** der Querschnitt des Rings (23) so gestaltet ist, dass der radiale Abstand zum Karussell (1) und/oder die Neigung und/oder die Höhe der daran befestigbaren Bauteile durch Formschluß selbstzentrierend festlegbar ist.

28. Maschine nach Anspruch 27, **dadurch gekennzeichnet, dass** der Ring (23) an seiner Oberseite eine zur Horizontalen geneigte, in Umfangsrichtung verlaufende Fläche (23a) aufweist.

29. Maschine nach Anspruch 27, **dadurch gekennzeichnet, dass** der Ring (23) an seiner Unterseite wenigstens eine geneigte Fläche, insbesondere eine V-förmige, in Umfangsrichtung verlaufende Rille (23b) aufweist.

30. Maschine nach wenigstens einem der Ansprüche 22 bis 29, **dadurch gekennzeichnet, dass** die Etikettieraggregate (30, 30a, 30b, 30c) eigene, zur Bewegung des Karussells (1) synchronisierte elektromotorische Antriebe (32) aufweisen, deren Steuerung (34) vorzugsweise in ein ein Etikettieraggregat tragendes Untergestell (31) integriert ist.

31. Maschine nach Anspruch 30, **dadurch gekennzeichnet, dass** jedes Etikettieraggregat schnell lösbare Steckkupplungen für elektrische Energieversorgung, Signalaustausch mit einer Maschinensteuerung (38) und ggf. Druckluftversorgung aufweist.

32. Maschine nach wenigstens einem der Ansprüche 22 bis 31, **dadurch gekennzeichnet, dass** die Transportelemente (3, 4, 5, 6) auf einer Tischplatte (7) und das Karussell (1) in einem außerhalb der Tischplatte (7) angeordneten Drehlager (11) gelagert sind.

33. Maschine nach Anspruch 32, **dadurch gekennzeichnet, dass** das Drehlager (11) ein separat stehendes, vorzugsweise tischartiges Gestell (12) aufweist, insbesondere eine Tischplatte (14) mit einer angeformten oder aufgesetzten Lagersäule (13).

34. Maschine nach Anspruch 33, **dadurch gekennzeichnet, dass** die Lage der ersten und zweiten Tischplatte (7, 14) zueinander durch vorzugsweise zerstörungsfrei lösbare Verbindungselemente (21) festlegbar ist.

## Claims

1. Machine for dressing articles (40) such as containers or the like, with at least one carousel (1), at least one labelling unit (30) arranged at its periphery for dressing the articles (40), and transfer elements (3, 4, 5, 6) drivable in synchronization for positionally correct feed and discharge of the articles (40), **characterized in that** the transfer elements (3, 4, 5, 6) are mounted on a first table plate (7) and the carousel (1) is mounted in a rotary bearing (11) arranged outside the table plate (7).

2. Machine according to Claim 1, **characterized in that** the rotary bearing (11) has a separate, preferably table-like, stand (12), in particular a second table plate (14) with an integral or mounted bearing column (13).

3. Machine according to Claim 2, **characterized in that** the position of the table plates (7, 14) with respect to each other can be fixed by preferably non-destructively releasable connecting elements (21).

4. Machine according to Claim 2 or Claim 3, **characterized in that** the first and second table plates (7, 14) are arranged with a clear interstitial gap between them.

5. Machine according to any one of Claims 2 to 4, **characterized in that** the tops of the table plates (7, 14) have inclined, in particular hipped-roof-like, surfaces.

6. Machine according to any one of Claims 2 to 5, **characterized in that** drive elements for the carousel (1) are mounted on the stand (12), and/or drive elements (3', 4', 10, 20) for the transfer elements (3, 4, 5, 6) are mounted on the table plate (7) carrying the transfer elements (3, 4, 5, 6).

7. Machine according to any one of Claims 2 to 6, **characterized in that** a drive motor (20) is arranged on one of the table plates (7, 14), and power transmission elements (10', 16, 17) are provided between the two table plates (7, 14).

8. Machine according to any one of Claims 2 to 7, **characterized in that** the vertically projected area of the stand (12) carrying the carousel (1) is smaller than that of the carousel (1).

9. Machine according to any one of Claims 2 to 8, **characterized in that** the table plate (14) of the stand (12) has an outer contour lying within the circumference of the carousel.

10. Machine according to any one of Claims 2 to 9, **characterized in that** outriggers (22) jutting radially outwards beyond the circumference of the carousel are attached to the stand (12).

11. Machine according to Claim 10, **characterized in that** the outriggers (22) directly or indirectly hold and/or carry at least one protective cover (26) surrounding the carousel around part of its circumference.

12. Machine according to Claim 10 or Claim 11, **characterized in that** the outriggers (22) carry a ring (23) surrounding the carousel (1) around at least part of its circumference and preferably having a larger diameter than the carousel (1).

13. Machine according to any one of Claims 1 to 12, **characterized in that** the table plate (7) for the transfer elements carries at least one feed conveyor (5, 5a, 6, 3, 3a, 3b) and at least one discharge conveyor (5, 5b, 5c, 4, 4a, 4b) for the articles (40).

14. Machine according to Claim 13, **characterized in that** the feed and discharge conveyors (5) are coaligned.

15. Machine according to Claim 13, **characterized in that** the feed and discharge conveyors (5a, 5b, 5c) are arranged parallel, in particular with opposite conveying directions.

16. Machine according to Claim 13, **characterized in that** the feed and discharge conveyors (5a, 5b, 5c) are arranged transversely with respect to each other, in particular at right angles.

17. Machine according to at least one of Claims 1 to 16, **characterized in that** the transfer elements are star wheels (3, 3a, 3b, 4, 4a, 4b) and/or conveyor belts (5, 5a, 5b, 5c) and/or air conveyors and/or conveyor screws (6) and/or transfer belts.

18. Machine according to Claim 12, **characterized in that** labelling units (30, 30a, 30b, 30c) locatable at any desired position on the circumference of the carousel (1) are attachable to the ring, in particular by releasable, preferably self-centring coupling elements (29, 29a, 29b).

19. Machine according to at least one of Claims 1 to 18, **characterized in that** the labelling units (30, 30a, 30b, 30c) and/or the support frames (31) holding them carry a guard plate (26') and/or pressing elements (35).

20. Machine according to at least one of Claims 1 to 19, **characterized in that** the labelling units (30, 30a, 30b, 30c) have individual synchronized electric motor drives (32) for moving the carousel (1), the control unit (34) for the said drives being built into a support frame (31) carrying a labelling unit.

21. Machine according to Claim 20, **characterized in that** each labelling unit has quick-release plug connections for electrical power supply, exchange of signals with a machine control unit (38), and, if required, compressed air supply.

22. Machine according to at least one of the preceding Claims 1 to 21, **characterized in that** elements (21, 22, 23) are provided at the periphery of the carousel (1) for determining the relative position of at least the labelling unit (30) with respect to the carousel (1).

23. Machine according to Claim 22, **characterized in that** the elements fixed with respect to the stand are configured as outriggers (22) and/or struts (21) which preferably jut radially outwards beyond the circumference of the carousel.

24. Machine according to Claim 23, **characterized in that** the outriggers (22) directly or indirectly hold and/or carry at least one protective cover (26) surrounding the carousel around part of its circumference.

25. Machine according to Claim 22, **characterized in that** the elements are configured as a ring (23) which surrounds the carousel (1) around at least part of its circumference, is preferably carried by outriggers (22) jutting radially outwards from the stand (12) of the carousel, and in particular has a larger diameter than the carousel (1).

26. Machine according to Claim 25, **characterized in that** labelling units (30, 30a, 30b, 30c) locatable at any desired position on the circumference of the carousel (1) are attachable to the ring (23), in particular by releasable, preferably self-centring coupling elements (29, 29a, 29b).

27. Machine according to Claim 25 or Claim 26, **characterized in that** the cross-section of the ring (23) is designed so that the radial distance from the carousel (1) and/or the inclination and/or the height of the components attachable thereto can be fixed in a self-locating manner through positive connection.

28. Machine according to Claim 27, **characterized in that** on top of the ring (23) there is a face (23a) inclined to horizontal and running in the circumferential direction.

29. Machine according to Claim 27, **characterized in that** on the underside of the ring (23) there is at least one inclined face, in particular a V-shaped groove (23b), running in the circumferential direction.

30. Machine according to at least one of Claims 22 to 29, **characterized in that** the labelling units (30, 30a, 30b, 30c) have individual synchronized electric motor drives (32) for moving the carousel (1), the control unit (34) for the said drives being built into a support frame (31) carrying a labelling unit.

31. Machine according to Claim 30, **characterized in that** each labelling unit has quick-release plug connections for electrical power supply, exchange of signals with a machine control unit (38), and, if required, compressed air supply.

32. Machine according to at least one of Claims 22 to 31, **characterized in that** the transfer elements (3, 4, 5, 6) are mounted on a table plate (7) and the carousel (1) is mounted in a rotary bearing (11) arranged outside the table plate (7).

33. Machine according to Claim 32, **characterized in that** the rotary bearing (11) has a separate, preferably table-like, stand (12), in particular a table plate (14) with an integral or mounted bearing column (13).

34. Machine according to Claim 33, **characterized in that** the position of the first and second table plates (7, 14) with respect to each other can be fixed by preferably non-destructively releasable connecting elements (21).

## Revendications

1. Machine pour garnir des articles (40) comme des récipients ou des objets comparables comportant
au moins un carrousel (1),
au moins un groupe d'étiquetage (30) placé à sa périphérie et destiné à garnir les articles (40), et
des éléments de transport (3, 4, 5, 6) qui peuvent être commandés en synchronie et servent à faire entrer et sortir les articles (40) en position correcte,
**caractérisée en ce que**
les éléments de transport (3, 4, 5, 6) sont montés sur une première tablette (7) et le carrousel (1) dans un coussinet de pivotement (11) placé à l'extérieur de la tablette (7).

2. Machine selon la revendication 1,
**caractérisée en ce que**
le coussinet de pivotement (11) présente un bâti (12) vertical distinct, de préférence tabulaire, en particulier une deuxième tablette (14) munie d'une colonne d'appui (13) façonnée ou appliquée.

3. Machine selon la revendication 2,
**caractérisée en ce que**
la position des tablettes (7, 14) l'une par rapport à l'autre peut être déterminée par des éléments de liaison (21) de préférence détachables sans destruction.

4. Machine selon la revendication 2 ou 3,
**caractérisée en ce que**
la première et la deuxième tablette (7, 14) sont placées à distance l'une de l'autre en formant un intervalle libre.

5. Machine selon l'une des revendications 2 à 4,
**caractérisée en ce que**
le côté supérieur des tablettes (7, 14) présente des surfaces inclinées, en particulier à la manière d'un toit en croupe.

6. Machine selon l'une des revendications 2 à 5,
**caractérisée en ce que**
des éléments d'entraînement pour le carrousel (1) sont montés sur le bâti (12) et/ou des éléments d'entraînement (3', 4', 10, 20) pour les éléments de transport (3, 4, 5, 6) sont montés sur la tablette (7) qui porte les éléments de transport (3, 4, 5, 6).

7. Machine selon l'une des revendications 2 à 6,
**caractérisée en ce que**
un moteur d'entraînement (20) est placé sur une des tablettes (7, 14) et des éléments de transmission des forces (10', 16, 17) se trouvent entre les deux tablettes (7, 14).

8. Machine selon l'une des revendications 2 à 7,
**caractérisée en ce que**
la surface de projection orthogonale du bâti (12) qui porte le carrousel (1) est plus petite que celle du carrousel (1).

9. Machine selon l'une des revendications 2 à 8,
**caractérisée en ce que**
la tablette (14) du bâti (12) présente un contour extérieur situé à l'intérieur de la périphérie du carrousel.

10. Machine selon l'une des revendications 2 à 9,
**caractérisée en ce que**
des bras (22) en saillie sur la périphérie du carrousel sont fixés au bâti (12) de façon à dépasser radialement vers l'extérieur.

11. Machine selon la revendication 10,
**caractérisée en ce que**
les bras (22) maintiennent et/ou portent directement ou indirectement au moins un revêtement protecteur (26) qui entoure en partie la périphérie du carrousel.

12. Machine selon la revendication 10 ou 11,
**caractérisée en ce que**
les bras (22) portent un anneau (23) qui entoure au moins en partie la périphérie du carrousel (1) et dont le diamètre est de préférence supérieur au carrousel (1).

13. Machine selon l'une des revendications 1 à 12,
**caractérisée en ce que**
la tablette (7) pour les éléments de transport porte au moins un convoyeur d'entrée (5, 5a, 6, 3, 3a, 3b) et au moins un convoyeur de sortie (5, 5b, 5c, 4, 4a, 4b) pour les articles (40).

14. Machine selon la revendication 13,
**caractérisée en ce que**
les convoyeurs d'entrée et les convoyeurs de sortie (5) sont alignés les uns par rapport aux autres.

15. Machine selon la revendication 13,
**caractérisée en ce que**
les convoyeurs d'entrée et les convoyeurs de sortie (5a, 5b, 5c) sont parallèles les uns aux autres, en particulier leur direction de transport est opposée.

16. Machine selon la revendication 13,
**caractérisée en ce que**
les convoyeurs d'entrée et les convoyeurs de sortie (5a, 5b, 5c) sont disposés transversalement les uns aux autres, en particulier ils forment un angle droit.

17. Machine selon au moins l'une des revendications 1 à 16,
**caractérisée en ce que**
les éléments de transport sont des roues en étoile (3, 3a, 3b, 4, 4a, 4b) et/ou des bandes transporteuses (5, 5a, 5b, 5c) et/ou des convoyeurs pneumatiques et/ou des hélices transporteuses (6) et/ou des courroies de transport.

18. Machine selon la revendication 12,
**caractérisée en ce que**
des groupes d'étiquetage (30, 30a, 30b, 30c) à placer à volonté à la périphérie du carrousel (1) peuvent être amarrés sur l'anneau, en particulier à l'aide d'éléments de couplage (29, 29a, 29b) détachables, de préférence à centrage automatique.

19. Machine selon au moins l'une des revendications 1 à 18,
**caractérisée en ce que**
les groupes d'étiquetage (30, 30a, 30b, 30c) et/ou les châssis (31) qui les reçoivent portent une vitre protectrice (26') et/ou des éléments presseurs (35).

20. Machine selon au moins l'une des revendications 1 à 19,
**caractérisée en ce que**
les groupes d'étiquetage (30, 30a, 30b, 30c) présentent des entraînements (32) particuliers, synchronisés, à moteur électrique et destinés à déplacer le carrousel (1), la commande (34) des entraînements étant de préférence intégrée à un châssis (31) qui porte un groupe d'étiquetage.

21. Machine selon la revendication 20,
**caractérisée en ce que**
chaque groupe d'étiquetage présente des connecteurs rapides à détacher pour assurer l'alimentation électrique, l'échange des signaux avec une commande de machine (38) et éventuellement l'alimentation en air comprimé.

22. Machine selon au moins l'une des revendications précédentes, 1 à 21,
**caractérisée en ce que**
à la périphérie du carrousel (1) se trouvent des éléments (21, 22, 23) pour déterminer la position relative au moins du groupe d'étiquetage (30) par rapport au carrousel (1).

23. Machine selon la revendication 22,
**caractérisée en ce que**
les éléments solidaires du bâti prennent la forme de bras (22) et/ou de supports (21) qui de préférence dépassent radialement vers l'extérieur de la périphérie du carrousel.

24. Machine selon la revendication 23,
**caractérisée en ce que**
les bras (22) maintiennent et/ou portent directement ou indirectement au moins un revêtement protecteur (26) qui entoure en partie la périphérie du carrousel.

25. Machine selon la revendication 22,
**caractérisée en ce que**
les éléments prennent la forme d'un anneau (23) qui entoure au moins en partie la périphérie du carrousel (1), est de préférence porté par des bras (22) en saillie radiale vers l'extérieur du bâti (12) du carrousel et a en particulier un diamètre supérieur à celui du carrousel (1).

26. Machine selon la revendication 25,
**caractérisée en ce que**
des groupes d'étiquetage (30, 30a, 30b, 30c) à placer à volonté à la périphérie du carrousel (1) peuvent être amarrés à l'anneau (23), en particulier à l'aide d'éléments de couplage (29, 29a, 29b) détachables, de préférence à centrage automatique.

27. Machine selon la revendication 25 ou 26,
**caractérisée en ce que**
la section transversale de l'anneau (23) est conçue de telle manière que l'écart radial par rapport au carrousel (1) et/ou l'inclinaison et/ou la hauteur des composants qu'on peut y fixer puisse être déterminé par centrage automatique par combinaison de formes.

28. Machine selon la revendication 27,
**caractérisée en ce que**
l'anneau (23) présente sur son côté supérieur une surface (23a) inclinée par rapport à l'horizontale et dirigée vers la périphérie.

29. Machine selon la revendication 27,
**caractérisée en ce que**
l'anneau (23) présente sur son côté inférieur au moins une surface inclinée, en particulier une cannelure (23b) en forme de V et dirigée vers la périphérie.

30. Machine selon au moins l'une des revendications 22 à 29,
**caractérisée en ce que**
les groupes d'étiquetage (30, 30a, 30b, 30c) présentent des entraînements (32) particuliers, synchronisés, à moteur électrique et destinés à déplacer le carrousel (1), la commande (34) des entraînements étant de préférence intégrée à un châssis (31) qui porte un groupe d'étiquetage.

31. °) Machine selon la revendication 30,
**caractérisée en ce que**
chaque groupe d'étiquetage présente des connecteurs rapides à détacher pour assurer l'alimentation électrique, l'échange des signaux avec une commande de machine (38) et éventuellement l'alimentation en air comprimé.

32. Machine selon l'une au moins l'une des revendications 22 à 31,
**caractérisée en ce que**
les éléments de transport (3, 4, 5, 6) sont montés sur une tablette (7) et le carrousel (1) dans un coussinet de pivotement (11) placé à l'extérieur de la tablette (7).

33. Machine selon la revendication 32,
**caractérisée en ce que**
le coussinet de pivotement (11) présente un bâti (12) vertical distinct, de préférence tabulaire, en particulier une deuxième tablette (14) munie d'une colonne d'appui (13) façonnée ou appliquée.

34. Machine selon la revendication 33,
**caractérisée en ce que**
la position de la première et de la deuxième tablette (7, 14) l'une par rapport à l'autre peut être déterminée par des éléments de liaison (21) de préférence détachables sans destruction.
